# EUROPEAN PATENT APPLICATION

(11) **EP 1 413 953 A2**
(43) Date of publication of application: **28.04.2004**
(21) Application number: 03256630.9
(22) Date of filing: 21.10.2003
(51) Int. Cl.: G06F 9/38

(54) **Instruction prefetch method and apparatus for conditional branch instructions**

(30) Priority: 22.10.2002 JP 2002307184
(71) Applicant: FUJITSU LIMITED, Kawasaki-shi, Kanagawa 211-8588 (JP)
(72) Inventor: Saruwatari, Toshiaki, Fujitsu Limited, Kawasaki-shi Kanagawa 211-8588 (JP); Suetake, Seiji, Fujitsu Limited, Kawasaki-shi Kanagawa 211-8588 (JP)
(74) Representative: Stebbing, Timothy Charles

(57) **Abstract**

An information processing unit including: a prefetch buffer (103) for fetching an instruction through a bus (112) having a width twice or more as large as the instruction length, to store the prefetched instruction; a decoder (105) for decoding the instruction stored in the prefetch buffer (103); and an arithmetic unit (107) for executing the decoded instruction. An instruction request control circuit (104) performs a prefetch request to prefetch a branch target instruction when a branch instruction is decoded, otherwise the instruction request control circuit (104) performs the prefetch request sequentially to prefetch the instructions. A prefetch control circuit (104) fetches the branch target instruction to the prefetch buffer (103) when the branch is certain to occur by executing the branch instruction, while the prefetch control circuit (104) ignores the branch target instruction when a branch does not occur.

## Description

The present invention relates to an information processing technology in which pipelined processing is performed on a series of instructions, the processing including steps such as an instruction fetch, an instruction decode, and an execution of an instruction.

An information processing unit, in which a pipelined processing is used to perform an instruction fetch, an instruction decode, and an execution of an instruction, requires a decode of a subsequent instruction in parallel with an execution of a branch instruction. Therefore, a vacant slot is generated in a pipeline when a branch is actually taken, which incurs a time penalty. To solve this problem, such methods as a delayed branch, a branch prediction, and a dual fetch can be used.

An information processing unit referred to below in a patent document 1 has: an instruction fetch unit for fetching instruction series both on a sequential side and on a target side; a cache control unit for fetching instructions from a cache memory or a main memory in response to a fetch request from the instruction fetch unit; a memory bus access unit for accessing the main memory; an instruction buffer for retaining the fetched instruction; and a branch prediction unit for performing a branch prediction of a branch instruction stored in the instruction buffer, prior to an execution of the branch instruction. The cache control unit limits, according to a branch prediction direction from the branch prediction unit, a memory bus access to the main memory resulting from a cache miss, when a branch direction of the branch instruction is not determined. Thus, in a microprocessor having a cache memory therein, an access to the external main memory is limited, so that the efficiency in accessing the main memory is enhanced.

### [Patent Document 1]

Japanese Patent Application Laid-open No. 2001-154845

The delayed branch referred to above is one in which, when a delayed branch instruction appears, a branch to a branch target occurs following an instruction (a delayed slot) subsequent thereto. A delayed branch operation may have a problem in that a penalty continues to exist if there is no instruction to put in the delayed slot, and since it is normally just one instruction that can be inserted in the delayed slot, a pipeline structure spending two cycles for the instruction fetch causes the penalty to be generated.

The branch prediction referred to above is one in which the branch prediction is performed by decoding, so as to perform the prefetch thereof. The branch prediction causes a penalty also, if the prediction goes wrong. Accordingly, it is necessary to enhance a prediction hit ratio, but such an enhancement requires a complex and large-scale mechanism.

The dual fetch referred to above is one in which two ports are prepared, one for a case when a branch is taken, and the other for a case when a branch is not taken. In a dual fetch operation, a prefetch buffer is prepared, contents thereof are predecoded, and if a branch instruction is given, both the branch target instruction and the instruction on the sequential side are fetched. This means that two buses are required for the fetch, which makes the mechanism large-scaled and complex.

Moreover, when the branch prediction results in a failure of the prediction, or when the dual fetch results in a cache miss, an unwanted access to the external main memory occurs, which results in an increase in penalties (e.g. processing delays).

It is therefore desirable to provide a method in which a simple logic circuit is used, instead of a large-scale circuit, so as to eliminate a penalty when a branch instruction is executed.

According to one aspect of the present invention, there is provided an information processing unit including: a prefetch buffer for fetching an instruction through (via) a bus having a width a least twice as large as an instruction length, to store the prefetched instruction; a decoder for decoding the instruction stored in the prefetch buffer; and an arithmetic unit for executing the decoded instruction. An instruction request control circuit performs a prefetch request to prefetch a branch target instruction when a branch instruction is decoded, otherwise the instruction request control circuit performs the prefetch request sequentially to prefetch the instructions. A prefetch control circuit fetches the branch target instruction to the prefetch buffer when the branch is certain (ensured) to occur by executing the branch instruction, while the prefetch control circuit ignores the branch target instruction when a branch does (will) not occur.

The prefetch request is performed to prefetch the branch target instruction when the branch instruction is decoded, otherwise the prefetch request is performed sequentially to prefetch the instructions. This makes it possible to prepare both instructions, one of which is when the branch is taken, and the other is when the branch is not taken. Thereby, it is also made possible to eliminate branch penalties, regardless of the branch being taken or not, without using a large-scale prediction circuit or the like. Hence processing speed is improved.

According to a further aspect of the present invention there is provided an information processing method for eliminating branch penalties.

Reference is now made, by way of example only, to the accompanying drawings in which:
Fig.1 is a block diagram showing an information processing unit according to an embodiment of the present invention;
Fig.2 is a view showing an example of computer programs (an instruction group) that are objects to be processed in the embodiment of the present invention;
Fig.3 is a timing chart showing operations performed by an ordinary information processing unit in which instructions are processed one by one in a simple manner;
Fig.4 is a timing chart showing operations when branch conditions are satisfied to allow a branch, in the information processing unit according to the embodiment of the present invention; and
Fig.5 is a timing chart showing operations when the branch conditions are not satisfied so as not to allow the branch, in the information processing unit according to the embodiment of the present invention.

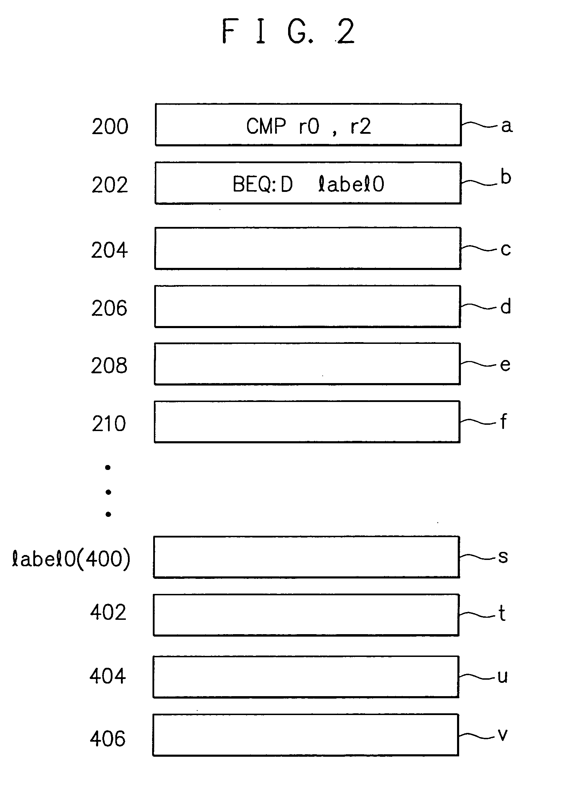

Fig.2 shows an example of computer programs (an instruction group) "a" to "v" that are objects to be processed in an embodiment of the present invention. Each of the instructions "a" to "v" has an instruction length of 16 bits. One location for each address can store up to one byte (8 bits). For example, in the addresses for locations 200 to 210, the instructions "a" to "f" are stored respectively, while in the addresses for locations 400 to 406, instructions "s" to "v" are stored respectively. The location 400 is labeled as "label 0 (zero)". When the programs are executed, the instruction "a" is executed first. In an instruction "a" cycle, for example, a value of a register "r0 (zero)" is compared with that of a register "r2". This is followed by an execution of the instruction "b". The instruction "b" is an instruction in which a branch is taken to "label 0 (zero)" (location 400) if, as a result of the comparison referred to above, the registers "r0" and "r2" are of equal value. If the registers are not of equal value, the instruction "b" is an instruction for executing the instructions sequentially with no branching. Such an instruction as the instruction "b" is designated as a branch instruction. A branch instruction includes a conditional branch instruction and/or an unconditional branch instruction. In the case of the conditional branch instruction, the branch is taken according to conditions such as a comparison result or the like as in an instruction "b" case. In the case of the unconditional branch instruction, the branch is unconditionally taken as in cases of a CALL instruction or a JUMP instruction.

The branch instruction "b" is specially designated as a delayed branch instruction (which may be denoted as ":D", for example). Hereinafter, the delayed branch instruction will be explained. In the case of the conditional branch instruction, the branch is taken to a certain branch target if the conditions are met, while the branch is not taken if the conditions are not met. The delayed branch instruction "b" executes, after the instruction "b", the instructions "c", "d", "e", and "f" sequentially if the branch is not taken, while executing, after the instruction "b", the instructions "c", "s", "t", "u", and "v" in that order if the branch is taken. This means that whether the branch is taken or not, the instruction "c" following the delayed branch instruction "b" is always executed, and thereafter the branch is taken. The instruction "c" subsequent to the delayed instruction "b" is called a delayed slot instruction.

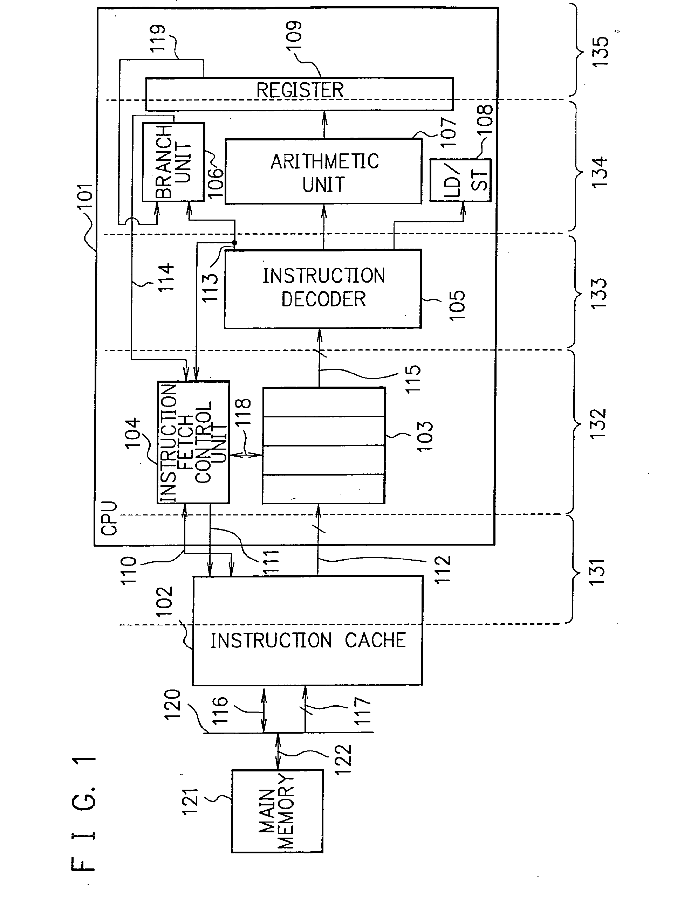

Fig.1 is a block diagram of an information processing unit according to the embodiment of the invention. This information processing unit carries out a pipelined processing composed of five stages, the five stages including: an instruction address requesting stage (hereinafter referred to as an "IA stage") 131; an instruction fetch stage (hereinafter referred to as an "IF stage") 132; an instruction decode stage (hereinafter referred to as an "ID stage") 133; an execution stage (hereinafter referred to as an "EX stage") 134; and a register write back stage (hereinafter referred to as an "WB stage") 135. The following explanation will be made on a case, as an example, wherein a bit length of the instruction is 16 bits.

A CPU (Central Processing Unit) 101 is connected to a main memory 121 through an instruction cache memory (hereinafter referred to as an "instruction cache") 102. To be more specific, the main memory 121 such as an SDRAM is connected to an external bus 120 through a 32-bit width bus 122. The instruction cache 102 is connected to the external bus 120 through a 32-bit width bus 117. The CPU 101 is connected to the instruction cache 102 through a 32-bit width bus for instruction 112. The instruction cache 102 reads in advance, to store therein, a part of instructions (programs) frequently used from the main memory 121, while chasing off (shunting out) the less used instructions therefrom. Such a case when an instruction requested by the CPU 101 exists in the instruction cache 102 is called a cache hit. When a cache hit occurs, the CPU 101 can receive the instruction from the instruction cache 102. In contrast, the case when an instruction required by the CPU 101 does not exist in the instruction cache 102 is called a cache miss. When a cache miss occurs, the instruction cache 102 uses the bus access signal 116 to perform a read-out request to read out the instruction to the main memory 121. The CPU 101 can read the instruction out of the main memory 121 through the instruction cache 102. The transfer rate of the bus 112 is much faster than that of the external bus 120. Accordingly, the speed of read out of the instruction when the cache hit occurs is much faster than that when the cache miss occurs. Further, because of a high probability that the instructions (programs) are read out sequentially, a cache hit rate becomes high. Accordingly, the use of the instruction cache 102 allows the CPU 101 to increase its overall (processing) speed to read out the instructions.

The CPU 101 includes an instruction queue (prefetch buffer) 103, an instruction fetch control unit 104, an instruction decoder 105, a branch unit 106, an arithmetic unit 107, a load and store unit 108, and a register 109. The instruction queue 103, in which, for example, four pieces of instructions, each having a length of 16 bits, can be stored at maximum, is connected to the instruction cache 102 through the 32 bit-width bus 112, and to the instruction decoder 105 through the 16 bit-width bus 115. This means that the instruction queue 103 writes therein each instruction from the instruction cache 102 in a 32-bit unit and reads out the instruction in a 16-bit unit therefrom so as to output it to the instruction decoder 105. The instruction fetch control unit 104 inputs to/outputs from the instruction cache 102 a cache access control signal 110, and controls the input/output of the instruction queue 103. The instruction decoder 105 decodes each of the instructions stored in the instruction queue 103, one by one. The arithmetic unit 107 executes (operates) each of the instructions decoded by the instruction decoder 105, one by one. To the register 109, a result brought (obtained) by the execution of the arithmetic unit 107 is written. The load and store unit 108 executes loading or storing between the register 109 and the main memory 121 when the instruction decoded by the instruction decoder 105 denotes a load/store instruction.

An instruction fetch operation is implemented in such a manner as that the instruction fetch control unit 104 makes an instruction request to the instruction cache 102 according to a state of the CPU 101 (IA stage 131), followed by a next cycle in which the instruction is fetched into the instruction queue 103 (IF stage 132). However, it should be noted that, since the embodiment described herein is directed to reducing branch penalties in such a manner as to store subsequent instructions in the instruction queue 103, the instruction fetch operation is implemented in a 32-bit unit (i.e. in units of two instructions), which is twice the length of each instruction. Next, a first instruction in the instruction queue 103 is decoded by the instruction decoder 105 (ID stage 133), followed by a cycle in which an action indicated in the instruction is taken (EX stage 134), and is written back in the register 109 (WB stage 135), which concludes one instruction. The CPU 101 performs the above-mentioned operations with a pipeline.

The instruction decoder 105 outputs a branch instruction decode notification signal 113 to the instruction fetch control unit 104 and the branch unit 106, if the instruction decoded by the instruction decoder 105 is a branch instruction. The instruction fetch (request) control unit (circuit) 104 performs a prefetch request to prefetch (call in advance) a branch target instruction when the branch instruction decode notification signal 113 is inputted therein (i.e. when the branch instruction is decoded), otherwise the instruction fetch control unit 104 performs the prefetch request sequentially to prefetch the instructions. To be specific, the instruction fetch control unit 104 performs the prefetch request by outputting the cache access control signal 110 to the instruction cache 102. The prefetch request causes the instruction to be prefetched from the instruction cache 102 to the instruction queue 103.

As described above, the prefetch request is performed to prefetch the branch target instruction at the decoding stage prior to the execution of the branch instruction. Thereafter, at a stage of the branch instruction being executed, whether to branch or not is determined. This means that the operation of the arithmetic unit 107 causes the instruction immediately preceding the branch instruction to be executed, and the execution result is written to the register 109. The execution result 119 in the register 109 is inputted into the branch unit 106. The operation of the arithmetic unit 107 then causes the branch instruction to be executed, and information (a result) indicating whether branch conditions have been realized or not is inputted into the branch unit 106, for example, through a flag provided in the register 109. The branch unit 106 outputs the branch instruction execution notification signal 114 to the instruction fetch control unit 104, according to the branch instruction decode notification signal 113 and the branch instruction execution result 119. This means that according to the execution result of the branch instruction, the branch unit 106 notifies whether to branch or not, by using the branch instruction execution notification signal 114. When a branch is taken, the instruction fetch (prefetch) control unit (circuit) 104 prefetches (calls, jumps to) the branch target instruction, on which the prefetch request has been made as described above, to the instruction queue 103. When a branch is not taken, the instruction fetch control unit 104 does not prefetch (ignores) the branch target instruction, on which the prefetch instruction has been made as described above, and carries out prefetch, decode, and execution of a sequential (next) instruction, while outputting an access cancel signal 111 to the instruction cache 102. The instruction cache 102, which has already received the prefetch request for prefetching the branch target described above, is ready to access the main memory 121 when the cache miss occurs. The instruction cache 102 cancels the access to the main memory 121 when the access cancel signal 111 is inputted therein, thereby eliminating an unnecessary access to the main memory 121 and thus preventing degradation in performance.

It should be noted that the execution result 119, which has been explained as being inputted to the branch unit 106 from the register 109 for the purpose of concise description, can actually be inputted to the branch unit 106 by using a bypass circuit, without having to wait for a completion of the execution of the EX stage 134.

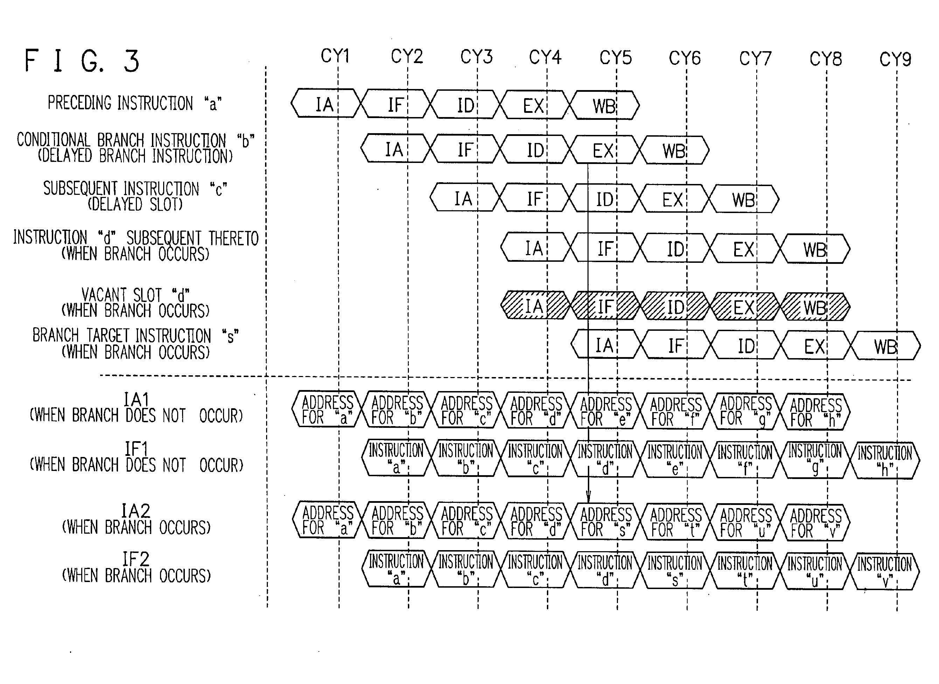

Fig.3 is a timing chart for reference showing operations performed by an ordinary information processing unit in which instructions are processed one by one in a simple manner. The explanation of the chart is hereinafter given, employing as an example the processing of the programs in Fig. 2. A cache access address IA1 is an address to which an instruction request is made when the branch is not taken. Cache access data IF1 is data that is outputted by the instruction cache 102 to the instruction queue 103 when the branch is not taken. A cache access address IA2 is an address to which the instruction request is made when the branch is taken. Cache access data IF2 is data that is outputted by the instruction cache 102 to the instruction queue 103 when the branch is not taken.

In a cycle CY1, an instruction request is made on the instruction "a" at the IA stage 131. Here, the cache access addresses IA1 and IA2 are the addresses for the instruction "a".

Next, in a cycle CY2, the instruction "a" is fetched at the IF stage 132, and the instruction request is made on the delayed branch instruction (the conditional branch instruction) "b" at the IA stage 131. Here, the cache access addresses IA1 and IA2 are the addresses for the instruction "b", while the cache access data F1 and IF2 represent the instruction "a".

Next, in a cycle CY3, the instruction "a" is decoded at the ID stage 133, the delayed branch instruction "b" is fetched at the IF stage 132, and the instruction request is made on the instruction "c" (the delayed slot) at the IA stage 131. Here, the cache access addresses IA1 and IA2 are the addresses for the instruction "c", while the cache access data IF1 and IF2 represent the instruction "b".

Next, in a cycle CY4, the instruction "a" is executed at the EX stage 134, the delayed branch instruction "b" is decoded at the ID stage 133, the instruction "c" is fetched at the IF stage 132, and the instruction request is made on the instruction "d" at the IA stage 131. Here, the cache access addresses IA1 and IA2 are the addresses for the instruction "d", while the cache access data IF1 and IF2 represent the instruction "c".

At the EX stage 134 following the decode of the delayed branch instruction "b" described above, whether to branch or not is determined, depending on which processes following a cycle CY5 change. An explanation of a process in which the branch is not taken is given in the following.

In the cycle CY5, the instruction "a" is written to the register at the WB stage 135, the delayed branch instruction "b" is executed at the EX stage 134, the instruction "c" is decoded at the ID stage 133, the instruction "d" is fetched at the IF stage 132, and the instruction request is made on the instruction "e" at the IA stage 131. Here, the cache access address IA1 is the address for the instruction "e", and the cache access data IF1 represents the instruction "d".

In the following cycle CY6, the delayed branch instruction "b" is written to the register at the WB stage 135, the instruction "c" is executed at the EX stage 134, the instruction "d" is decoded at the ID stage 133, the instruction "e" is fetched at the IF stage 132, and the instruction request is made on the instruction "f" at the IA stage 131. Here, the cache access address IA1 is the address for the instruction address "f", and the cache access data IF1 represents the instruction "e".

In a cycle CY7 and cycles subsequent thereto as well, processes similar to those mentioned above are carried out. As explained above, when the branch is not taken, the processes are implemented simply in a sequential manner starting from the instruction "a", causing no vacant slot and allowing an efficient pipelined processing.

Next, a case when the branch is taken will be explained. In the cycle CY5, when the branch is taken, the instruction "d", on which the instruction request has been made in the above-mentioned cycle CY4, is cancelled. As a result, the IA stage 131 in the cycle CY4 becomes a vacant slot, thereby causing an unwanted process. In the cycle CY5, the instruction "a" is written to the register at the WB stage 135, the delayed branch request "b" is executed at the EX stage 134, the instruction "c" is decoded at the ID stage 133, the IF stage 132 becomes a vacant slot, and the instruction request is made on the branch target instruction "s" at the IA stage 131. Here, the cache access address IA2 is the address for the instruction "s", and the cache access data IF2 represents the instruction "d".

In the following cycle CY6, the delayed branch instruction "b" is written to the register at the WB stage 135, the instruction "c" is executed at the EX stage 134, the ID stage 133 becomes a vacant slot, the branch target instruction "s" is fetched at the IF stage 132, and the instruction request is made on the instruction "t" at the IA stage 131. Here, the cache access address IA1 is the address for instruction "t", and the cache access data IF1 represents the instruction "s".

In the following cycle CY7, the instruction "c" is written to the register at the WB stage 135, the EX stage 134 becomes a vacant slot, the branch target instruction "s" is decoded at the ID stage 133, the instruction "t" is fetched at the IF stage 132, and the instruction request is made on the instruction "u" at the IA stage 131. Here, the cache access address IA1 is the address for the instruction "u", and the cache access data IF1 represents the instruction "t".

In the cycle CY8 and cycles subsequent thereto as well, processes similar to those mentioned above are carried out. As explained above, when the branch is taken, the vacant slot "d" results, as shown by the hatched boxes, thereby not allowing an efficient pipelined processing. Since the determination on whether the conditions allow a branch or not cannot be made until the EX stage 134 of the branch instruction "b", determination on whether to, in the following process, fetch the branch target instruction or to continue to fetch the sequential instructions has to be delayed (waited for) until its determination is made, which results in causing a penalty. When the branch is taken, the same operations as for when the branch is not taken are performed until after (through) the instruction "c", but the instruction request made on the branch target instruction "s" is not issued until the branch is affirmed (ensured) to occur at the EX stage 134 of the delayed branch instruction "b". As a result, the instruction "d", on which the instruction request has been made earlier, is cancelled, causing a vacant slot in the pipeline to be generated. Further, even when a branch prediction is implemented, the penalty arises if the prediction goes wrong.

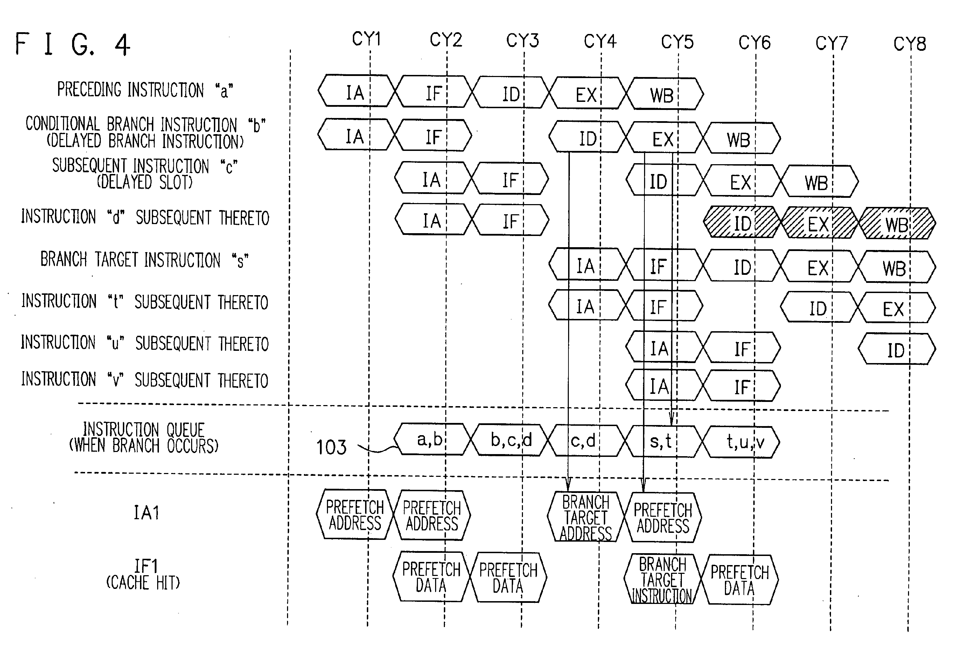

Fig.4 is a timing chart showing operations when branch conditions are satisfied to allow a branch in the information processing unit according to the embodiment of the present invention shown in Fig.1. The following explanation is given, employing as an example case one in which the programs in Fig. 2 are processed. A cache access address IA1 is an address to which the instruction request is made. Cache access data IF1 is the data outputted to the instruction queue 103 upon the cache hit of the instruction cache 102.

First, in a cycle CY1, the instruction request is made on two instructions, "a" and "b", at the IA stage 131. An instruction "b" denotes the delayed branch instruction. At the IA stage 131, the instruction request can be made in a 32-bit unit, i.e., in units of two instructions. Here, the cache access address IA1 is the address for the instructions "a" and "b".

Next, in the cycle CY2, the two instructions, "a" and "b", are fetched at the IF stage 132, while the instruction request is made on two instructions, "c" and "d", at the IA stage 131. At the IF stage 132, the fetch can be performed in a 32-bit unit, i.e., in the units of two instructions. This fetch operation causes the instructions "a" and "b" to be stored in the instruction queue 103. Here, the cache access address IA1 is the addresses for the instructions "c" and "d", while the cache access data IF1 represents the instructions "a" and "b".

Next, in the cycle CY3, one instruction, "a", is decoded at the ID stage 133, while two instructions, "c" and "d", are fetched at the IF stage 132. At the ID stage 133, the decoding is performed in a 16-bit unit, i.e., in the units of one instruction. The instructions "c" and "d" are inputted to the instruction queue 103 for their fetch, and the instruction "a" is outputted therefrom for its decoding, so that the instruction queue 103 has the instructions "b", "c", and "d" stored therein. Here, the cache access data IF1 denotes the instructions "c" and "d". Because of the instruction queue 103 allowing storage of four instructions at maximum in this example, the instruction request is not performed in this cycle.

Next, in the cycle CY4, the instruction "a" is executed at the EX stage 134, the instruction "b" is decoded at the ID stage 133, and the instruction request is made on two branch target instructions, "s" and "t", at the IA stage 131. At the EX stage 134, the execution is performed in a 16-bit unit, i.e., in units of one instruction. The instruction cache 103 has instructions "c" and "d" stored therein. Here, the cache access address IA1 is the address for the branch target instructions "s" and "t".

In the cycle CY4 explained above, the instruction decoder 105 decodes the branch instruction "b" to output the instruction decode notification signal 133. The instruction fetch control unit 104, by receiving the instruction decode notification signal 133, performs the instruction request on the branch target instructions "s" and "t". Here, the request is made regardless of the state of the instruction queue 103.

Next, in the cycle CY5, the instruction "a" is written to the register at the WB stage 135, the delayed branch instruction "b" is executed at the EX stage 134, the instruction "c" is decoded at the ID stage 133, the branch target instructions "s" and "t" are fetched at the IF stage 132, and the instruction request is made on instructions "u" and "v" at the IA stage 131. The instruction "c" (the delayed slot) is issued to the ID stage even when a branch is taken, because the instruction "c" is preceded by the delayed branch instruction "b". It is when satisfaction of the branch conditions is determined by executing the branch instruction "b" that the instruction request is made on the instructions "u" and "v". At the WB stage 135, the writing in the register is performed in a 16-bit unit, i.e., in units of one instruction. The instruction cache 103 has instructions "s" and "t" stored therein. Here, the cache access address IA1 is the addresses for the instructions "u" and "v", while the cache access data IF1 represents the instructions "s" and "t".

In this cycle CY5, the branch unit 106 outputs the branch instruction execution notification signal 114 for indicating that satisfaction of the branch conditions is certain (ensured) by executing the branch instruction "b", thereby causing the branch to occur. The instruction fetch control unit 104 deletes, through the control signal 118, the instruction "d" contained in the instruction queue 103.

Next, in the cycle CY6, the delayed branch instruction "b" is written to the register at the WB stage 135, the instruction "c" is executed at the EX stage 134, the branch target instruction "s" is decoded at the ID stage 133, and the instructions "u" and "v" are fetched at the IF stage. The instruction cache 103 has the instructions "t", "u", and "v" stored therein. Here, the cache access data IF1 represents the instructions "u" and "v".

Thereafter, in the cycle CY7 and cycles subsequent thereto as well, processes similar to those mentioned above are performed. As explained above, when the branch is taken, the vacant slot "d", shown hatched, is filled in by the slot of the branch target instruction "s", thereby allowing an efficient pipelined processing without wasted cycles.

In the embodiment described herein, the width of the bus for instruction 112 is expanded to a size twice as large as the width (instruction length) of the bus 115, allowing an increase in the bandwidth for supplying instructions, whereby the extra bandwidth can be utilized to reduce penalties caused when the branch is taken. The width (instruction length) of the bus for instruction 112 is sufficient if it is twice or more as large as that of the bus 115.

As aforementioned, in the cycle CY5, the conditions of the delayed condition branch instruction "b" are fixed at the EX stage. If the branch is taken here, the branch instruction execution notification signal 114 sent from the branch unit 106 is used to notify the instruction fetch control unit 104 that the branch occurs. The instruction fetch control unit 104, by receiving the notification, directs the instruction queue 103 to delete the prior data "d" and to fetch the instructions "s" and "t" that have been requested at the prior cycle CY4. This means that the instruction queue 103 is caused to have such a state that the branch target instruction "s" and the subsequent branch target instruction "t" exist therein. Also, the instruction fetch control unit 104 performs the instruction request on the subsequent branch target instructions "u" and "v". By performing the instruction fetch operations shown above, the branch target instruction "s" can be issued to the ID stage in the cycle CY6, thereby avoiding any penalty cycle when the branch is taken.

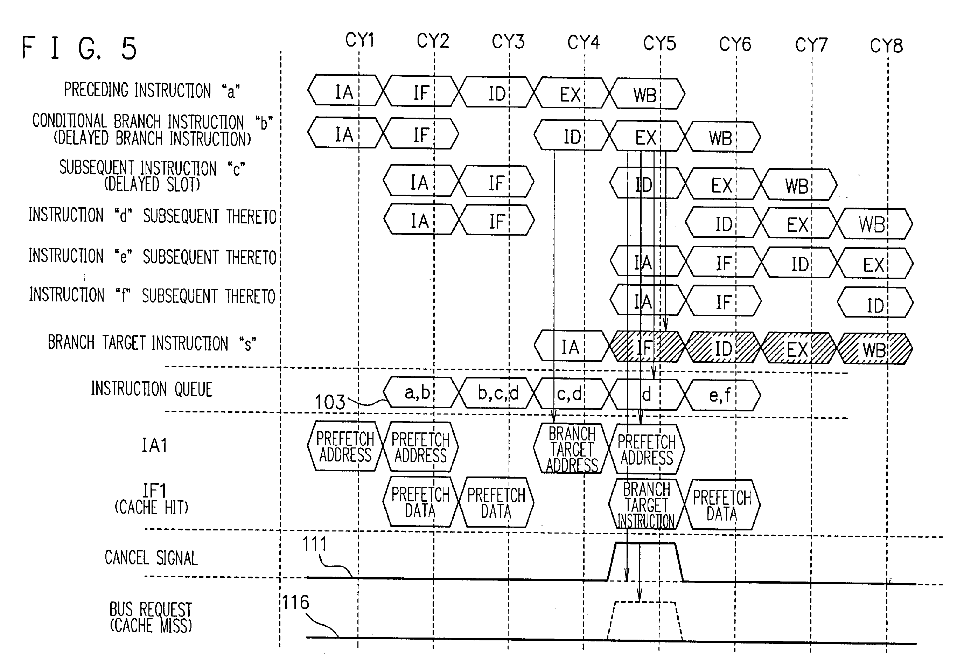

Fig.5 is a timing chart showing operations when the branch conditions are not satisfied so as not to allow the branch in the information processing unit according to the embodiment of the present invention shown in Fig.1. The operations are hereinafter explained, employing a case as an example wherein the programs in Fig. 2 are processed. The cache access address IA1 denotes the address to which the instruction request is made. The cache access data IF1 represents the data outputted to the instruction queue 103 when the cache hit occurs in the instruction cache 102.

Since the operations performed in the cycles CY1 to CY4 are the same as those shown in Fig.4, the explanation thereof is omitted herein. The following is the explanation on the cycle CY5 and subsequent cycles thereto.

In the cycle CY5, the instruction "a" is written to the register at the WB stage 135, the delayed branch instruction "b" is executed at the EX stage 134, the instruction "c" (the delayed slot) is decoded at the ID stage 133, and the instruction request is made on the two instructions, "e" and "f", at the IA stage 131. The instruction "c" is issued to the ID stage even when the branch occurs, because the instruction "c" is preceded by the delayed branch instruction "b". It is when non-satisfaction of the branch conditions is determined by executing the branch instruction "b" that the instruction request is made on the instructions "e" and "f" without fetching (jumping to) the branch target instructions "s" and "t". The instruction cache 103 has the instruction "d" stored therein. Here, the cache access address IA1 is the addresses for the instructions "e" and "f".

In this cycle CY5, the branch unit 106 outputs the notification signal 114 for indicating that the satisfaction of the branch conditions is not met (ensured) by executing the branch instruction "b", thereby causing the branch not to occur. The instruction fetch control unit 104 performs an instruction request on the instructions "e" and "f" to the instruction cache 102 through cache access control signal 110.

Next, in the cycle CY6, the delayed branch instruction "b" is written to the register at the WB stage 135, the instruction "c" is executed at the EX stage 134, the instruction "d" is decoded at the ID stage 133, and the instructions "e" and "f" are fetched at the IF stage 132. The instruction cache 103 has the instructions "e" and "f" stored therein. Here, the cache access data IF1 represents the instructions "e" and "f".

Thereafter, in the cycle CY7 and the cycles subsequent thereto as well, processes similar to those mentioned above are performed. As explained above, when the branch is not taken, the instruction request made on the branch target instruction "s" is followed not by the processes subsequent to the fetch, as shown hatched, but by the sequential processes such as the decode of the instruction "d", thereby allowing an efficient pipelined processing and causing no penalty. In the cycle CY5, where the conditions of the branch instruction "b" are not satisfied so that the branch does not occur, the branch instruction execution notification signal 114 sent from the branch unit 106 is used to notify the instruction fetch unit 104 that the branch does not occur (by the branch instruction). The instruction fetch control unit 104, by receiving the notification, directs the instruction queue 103 to cancel the fetch of the branch target instruction and issues a request for the instructions "e" and "f" that are subsequent to the instruction "d" existing in the instruction queue 103.

The fetch operation as described above allows, in the cycle CY6, the instruction "d" subsequent to the delayed slot "c" to be issued to the ID stage, and further allows the subsequent instructions, "e" and "f", to be fetched within the cycle CY6, thereby causing no penalty even when the branch is not taken.

Further, the access cancel signal 111 from the instruction fetch control unit 104 is asserted in the cycle CY5, which avoids the need for an access to the external main memory 121, the access being caused by the cache miss generated when the branch target instructions "s" and "t" are requested. To be more specific, the instruction cache 102, when the access cancel signal 111 is inputted therein, does not perform access to the main memory 121 since it does not assert a bus request 116. As a result, unwanted accesses to the bus can be prevented, allowing prevention of the performance degradation.

According to the embodiment described herein, there is provided an information processing unit having: the prefetch buffer 103 for fetching the instruction through a bus with its width being twice or more as large as the instruction length; the decoder 105 for decoding instructions that are stored in the prefetch buffer; and the arithmetic unit 107 for executing the decoded instructions. The instruction fetch unit 104 may comprise an instruction request control circuit and a prefetch control circuit. The instruction request control circuit performs the prefetch (advance call) request to prefetch the branch target instruction when the branch instruction is decoded, otherwise the instruction request control circuit performs the prefetch request sequentially to prefetch the instructions. Further, the prefetch control circuit fetches the branch target instruction to the prefetch buffer 103 when a branch is ensured (certain) to occur by executing the branch instruction, while the prefetch control circuit ignores the branch target instruction when a branch does not occur.

The prefetch request is performed to prefetch the branch target instruction when the branch instruction is decoded, otherwise the prefetch request is sequentially performed to prefetch the instructions. This makes it possible to prepare both instructions, one for when the branch is taken, and the other for when the branch is not taken. Thereby, it also becomes possible to eliminate branch penalties, regardless of the branch being taken or not, without using a large-scale prediction circuit or the like. Further, the signal 114 is prepared to notify the instruction cache 102 or a memory controller that the branch does not occur when the branch instruction is executed, which can prevent unwanted accesses to the main memory 121 caused by the cache miss. Thereby, the elimination of branch penalties, regardless of an approval or disapproval of the branch instruction, is made possible by using a simple logic circuit without using the large-scale prediction circuit or the like, thus avoiding unwanted accesses to the external bus 120.

The present embodiments are to be considered in all respects as illustrative and not restrictive, and all variations which come within the scope of the claims are therefore intended to be embraced therein. The invention may be embodied in other specific forms without departing from the essential teaching thereof.

As described above, a prefetch request is performed to prefetch the branch target instruction when the branch instruction is decoded, otherwise the prefetch request is sequentially performed to prefetch the instructions. This makes it possible to prepare both instructions, one of which is when the branch is taken, and the other is when the branch is not taken. Thereby, it is also made possible to eliminate branch penalties, regardless of the branch being taken or not, without using a large-scale prediction circuit or the like.

## Claims

1. An information processing unit, comprising:
a prefetch buffer for fetching an instruction through a bus having a width twice or more as large as the instruction length, to store the prefetched instruction;
a decoder for decoding the instruction stored in said prefetch buffer;
an arithmetic unit for executing the decoded instruction;
an instruction request control circuit for performing a prefetch request to prefetch a branch target instruction when a branch instruction is decoded, otherwise performing the prefetch request sequentially to prefetch the instructions; and
a prefetch control circuit for fetching the branch target instruction to said prefetch buffer when the branch is certain to occur by executing the branch instruction, and ignoring the branch target instruction when a branch does not occur.

2. The information processing unit according to claim 1, wherein said prefetch buffer prefetches the instruction from a main memory through an instruction cache memory.

3. The information processing unit according to claim 2, wherein said prefetch control circuit outputs to the instruction cache memory a control signal for canceling the prefetch request, which has been performed to prefetch the branch target instruction, when the branch does not occur, to thereby prevent an access to the main memory caused by a cache miss.

4. The information processing unit according to claim 2 or 3, wherein said prefetch buffer prefetches the instruction from the instruction cache memory through said bus having a width twice as large as the instruction length, and outputs the instruction to said decoder through a bus having a width equal to the instruction length.

5. The information processing unit according to claim 4, wherein said prefetch buffer stores a maximum of four instructions.

6. The information processing unit according to any preceding claim, wherein said decoder and said arithmetic unit perform operations in units of one instruction.

7. The information processing unit according to any preceding claim, wherein said instruction request control circuit and said prefetch control circuit perform operations to allow, when a delayed branch instruction appears, a branch to occur following an instruction subsequent to the delayed branch instruction.

8. The information processing unit according to any preceding claim, wherein the branch instruction includes a conditional branch instruction and/or an unconditional branch instruction.

9. The information processing unit according to any preceding claim, further comprising a register for writing therein an execution result of said arithmetic unit.

10. An information processing method, comprising:
a first prefetch step of prefetching an instruction through a bus having a width twice or more as large as the instruction length, to store the prefetched instruction;
a decode step of decoding the prefetched instruction;
an execution step of executing the decoded instruction;
an instruction request step of performing a prefetch request to prefetch a branch target instruction when a branch instruction is decoded, otherwise performing the prefetch request sequentially to prefetch the instructions; and
a second prefetch step of prefetching the branch target instruction when the branch is certain to occur by executing the branch instruction, and ignoring the branch target instruction when a branch does not occur.

11. The information processing method according to claim 10, wherein in said first prefetch step the instruction is prefetched from a main memory through an instruction cache memory.

12. The information processing method according to claim 11, wherein said second prefetch step includes outputting to the instruction cache memory a control signal for canceling the prefetch request, which has been performed to prefetch the branch target instruction, when the branch does not occur, to thereby prevent an access to the main memory caused by a cache miss.

13. The information processing method according to claim 11 or 12, wherein said first prefetch step prefetches the instruction from the instruction cache memory through said bus having a width twice as large as the instruction length, and outputs the instruction to said decode step through a bus having a width equal to the instruction length.

14. The information processing method according to claim 13, wherein in said first prefetch step a maximum of four instructions are stored.

15. The information processing method according to any of claims 10 to 14, wherein said decode step and said execution step perform operations in units of one instruction.

16. The information processing method according to any of claims 10 to 15, wherein said instruction request step and said second prefetch step include performing operations to allow, when a delayed branch instruction appears, a branch to occur following an instruction subsequent to the delayed branch instruction.

17. The information processing method according to any of claims 10 to 16, wherein said branch instruction includes a conditional branch and/or an unconditional branch.

18. The information processing method according to any of claims 10 to 17, wherein said execution step writes an execution result to a register.
